# EUROPEAN PATENT SPECIFICATION

(11) **EP 0 174 524 B1**
(45) Date of publication and mention of the grant of the patent: **03.02.1993**
(21) Application number: 85110443.0
(22) Date of filing: 20.08.1985
(51) Int. Cl.: G02B 6/38

(54) **Optical fiber connection**
Optische Fiberverbindung
Connexion fibre-optique

(30) Priority: 20.08.1984 JP 172614/84
(43) Date of publication of application: 19.03.1986
(73) Proprietor: SUMITOMO ELECTRIC INDUSTRIES LIMITED, Osaka-shi, Osaka 541 (JP)
(72) Inventor: Kakii, Toshiaki c/o Yokohama Works, Totsuka-ku Yokohama-shi Kanagawa (JP); Matsuno, Koichiro c/o Yokohama Works, Totsuka-ku Yokohama-shi Kanagawa (JP)
(74) Representative: Eitle, Werner, Dipl.-Ing.

(56) References cited:
- EP-A- 081 349
- EP-A- 109 648
- EP-A- 164 784
- EP-A- 0 131 131
- DE-A- 2 446 152
- DE-A- 2 842 077
- US-A- 4 083 625
- PATENT ABSTRACTS OF JAPAN, vol. 6, no. 166 (P-138)[1044], 31st August 1982; & JP - A - 57 84405
- Handbook of Optics, Fibre Optics and Lightwave communications Vocabulary

## Description

The present invention relates to an optical fiber connector, and to the use of the connector.

EP-A-0 109 648 discloses an optical connector comprising: two connector bodies joined together at corresponding matching faces, each connector body comprising a plurality of holes extending between its matching face and an opposite face, each hole supporting an end portion of an optical fibre, said end portion extending to and being unsheathed in the proximity of the matching face where it is connected to the end portion of another optical fibre supported in a corresponding position in the respective other connector body.

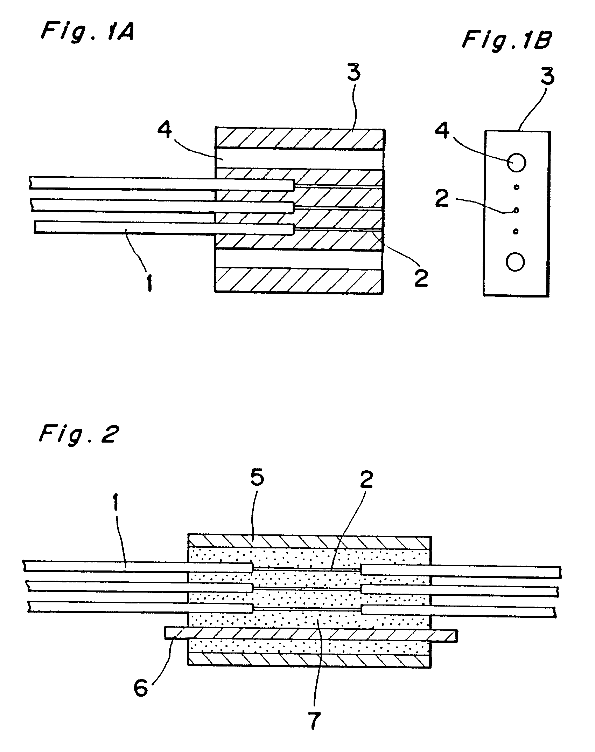

A typical conventional single core assembled type optical connector is shown in Figs. 1A and 1B of the accompanying drawings, which are respectively a longitudinal section and a side elevation of the connector. In these Figs. numeral 1 represents a sheathed (coated) optical fiber, numeral 2 represents an unsheathed optical fiber portion, numeral 3 represents a ferule in which the optical fiber portion 2 is positioned and fixed, and numeral 4 represents a guide hole receiving pin for positioning the connected ferule 2. As shown in the Figs., the number of the optical fibers to be connected and that of the sheathed optical fibers installed in the connector are the same. Therefore, once one of the fibers in the connector should be damaged or broken in the assembling field, the connector has to be re-brazed in place, or the whole connector has to be replaced, or all the fibers have to be reconnected by means of sheathed optical connector fibers.

Fig. 2 is a longitudinal section of a generally fusion-spliced connection of three single core sheathed optical fibers 1 reinforced by a heat-shrinkable tube 5. In this Fig., numeral 2 represents a fusion spliced optical fiber, numeral 6 represents a reinforcement steel wire, and numeral 7 represents a hot melt adhesive filling the gap between the fibers. With such fusionspliced connection, if one fiber is broken, all three fibers should be reconnected.

One object of the present invention is to provide an optical fiber connection which can overcome at least some drawbacks associated with the conventional optical fiber connections.

Another object of the present invention is to provide an optical fiber connection which can cope with urgent repair of a broken optical fiber in the connection.

According to one aspect of the invention, there is provided an optical connector comprising: two connector bodies joined together at corresponding matching faces, each connector body comprising a plurality of holes extending between its matching face and an opposite face, each hole supporting an end portion of an optical fibre, said end portion extending to and being unsheathed in the proximity of the matching face where it is connected to the end portion of another optical fibre supported in a corresponding position in the respective other connector body, the connector body being characterized in that each connector body comprises at least one additional hole extending between said matching and opposite faces, each additional hole supporting one end portion of a piece of optical fibre, the other end portion of which protrudes from said opposite face and is of a relatively short length compared with the other fibres, the pieces supported in corresponding positions in the two connector bodies being connected together, the resulting connection being arranged to be substituted for the connection between two other fibres when the latter connection breaks.

According to another aspect of the invention, there is provided an optical connector comprising a first and a second plurality of optical fibres, each fibre of one plurality having an unsheathed end portion which is coaxially aligned with and connected to an unsheathed end portion of a fibre of the other plurality, the connected end portions being embedded in a hot-melt adhesive enclosed in a heat-shrink tube, characterized in that said hot-melt adhesive also supports at least one piece of sheathed optical fibre whose opposite end portions protrude from the adhesive and are of a relatively short length compared with the fibres of said first and second plurality.

For a better understanding of the invention, and to show how the same may be carried into effect, reference will now be made, by way of example, to the accompanying drawings, in which:-
- Figs. 1A & 1B: are a longitudinal section and a side elevation respectively of a conventional single core assembled type optical connector;
- Fig. 2: is a longitudinal section of a generally fusion-spliced connection of three pairs of single core sheathed optical fibers which connection is reinforced by a heat-shrinkable tube;
- Figs. 3A & 3B: are a longitudinal section and a side elevation respectively of one embodiment of the optical fiber connection according to the present invention;
- Fig. 4: is a longitudinal section of a generally fusion-spliced connection of three pairs of single core sheathed optical fibers according to a further embodiment of the present invention, which connection is reinforced by a heat-shrinkable tube; and
- Figures 5A and 5B: show repaired connections.

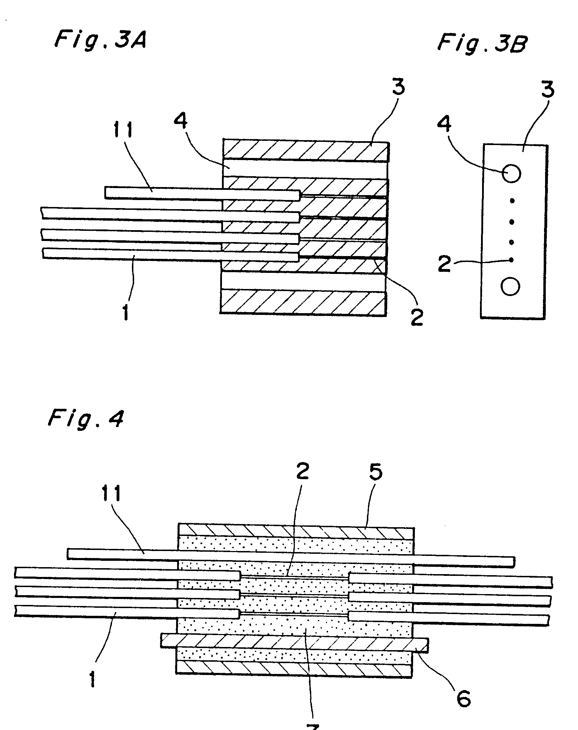

Figures 3A and 3B show one embodiment of optical fiber connection according to the present invention, in which the same numerals represent the same elements as in Figures 1A and 1B. In this type of the connection, although the connector is to be used for connecting three optical fibers 1, it includes an additional sheathed optical fiber 11, which is cut at a predetermined length from the connector, for example, one meter. The connector is supplied in a form including such additional optical fiber 11 and used in place. Three optical fibers 1 of the connector are connected to three sheathed optical fibers while the additional optical fiber 11 is left unconnected.

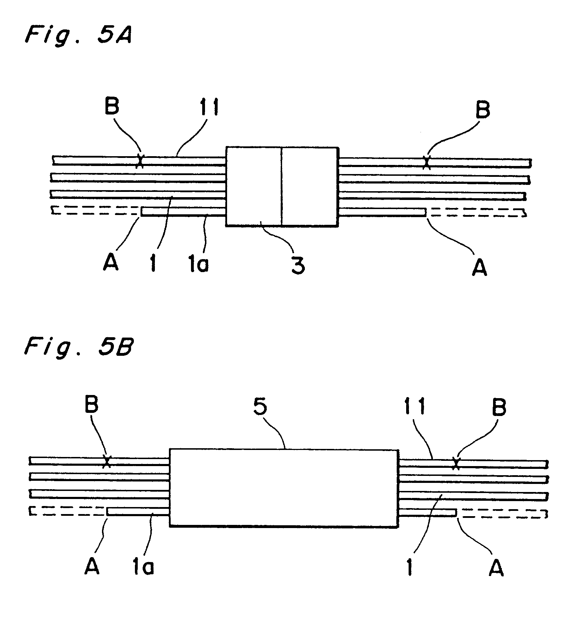

As shown in Figure 5A, if one pair 1a of the connected optical fibers gives trouble, each side of the fiber 1a is cut at the positions A and reconnected to the additional optical fiber 11 at the positions B.

Figure 4 shows a generally fusion-spliced connection of three single core optical fibers 1 which connection is reinforced by a heat-shrinkable tube 5. This connection also includes an additional optical fiber 11, which is reinforced by the tube 5 in the same manner as the other optical fibers being reinforced. If one pair 1a of the connected optical fibers gives trouble, the fiber 1a is cut at the positions A and reconnected to the additional optical fiber 11 at the positions B as shown in Figure 5B.

In the above description, one additional optical fiber is used, although two or more additional optical fibers may be included in the connection within the scope of the present invention.

When five optical fibers are connected by means of an optical connector similar to that shown in Figure 1, and one of them is broken, it takes 2 or 3 hours to reconnect all five fibers with a new connector, or it takes at least one hour to replace the troubled connector with a Pigral type connector, since the fibers should be fusion-spliced. In contrast, when the connector including the additional optical fiber according to the present invention is used, only the broken fiber is to be reconnected to both ends of the additional fiber. This takes less than 30 minutes, which is one fourth to one sixth of that required in case of the conventional optical connector, and a half of that required with use of the Pigral type connector. While the repair of the fusion-spliced connection of five optical fibers takes about one hour by the conventional method, it takes less than 30 minutes according to the present invention.

## Claims

1. An optical connector comprising: two connector bodies (3) joined together at corresponding matching faces, each connector body comprising a plurality of holes extending between its matching face and an opposite face, each hole supporting an end portion (2) of an optical fibre (1), said end portion (2) extending to and being unsheathed in the proximity of the matching face where it is connected to the end portion of another optical fibre supported in a corresponding position in the respective other connector body, the connector body being characterized in that each connector body (3) comprises at least one additional hole extending between said matching and opposite faces, each additional hole supporting one end portion of a piece of optical fibre (11), the other end portion of which protrudes from said opposite face and is of a relatively short length compared with the other fibres, the pieces supported in corresponding positions in the two connector bodies being connected together, the resulting connection being arranged to be substituted for the connection between two other fibres when the latter connection breaks.

2. An optical connector comprising a first and a second plurality of optical fibres (1), each fibre of one plurality having an unsheathed end portion (2) which is coaxially aligned with and connected to an unsheathed end portion (2) of a fibre of the other plurality, the connected end portions being embedded in a hot-melt adhesive enclosed in a heat-shrink tube, characterized in that said hot-melt adhesive (7) also supports at least one piece of sheathed optical fibre (11) whose opposite end portions protrude from the adhesive (7) and are of a relatively short length compared with the fibres (1) of said first and second plurality.

3. A connector according to claim 1, wherein each said piece of optical fiber (11) has an unsheathed portion within the associated body (3).

4. A connector according to claim 2 comprising at least two said pieces of optical fibre (11).

5. A connector as claimed in claim 1 or 3 wherein each body comprises at least two said pieces of optical fiber (11).

6. A connector according to claim 1,3 or 5, wherein said body contains hot-melt adhesive in which said fibers are embedded.

7. The use of a connector according to any of claims 1 to 6 to enable the optical path provided by a malfunctioning fiber within said body to be replaced by an optical path provided by the spare fiber without replacing the entire connector.

## Patentansprüche

1. Optischer Stecker umfassend: zwei Steckerkörper (3), die an entsprechenden Anpassungsstirnflächen miteinander verbunden sind, wobei jeder Steckerkörper eine Vielzahl von Löchern umfaßt, die zwischen seiner Anpassungsstirnfläche und einer gegenüberliegenden Stirnfläche verlaufen, wobei jedes Loch einen Endabschnitt (2) einer optischen Faser (1) hält, wobei sich der Endabschnitt (2) bis zur Anpassungsstirnfläche, an der er mit dem Endabschnitt einer weiteren in einer entsprechenden Position in dem jeweiligen anderen Steckerkörper gehaltenen optischen Faser verbunden ist, erstreckt und in der Nähe davon keine Umhüllung besitzt, wobei der Steckerkörper dadurch gekennzeichnet ist, daß jeder Steckerkörper (3) wenigstens ein zusätzliches Loch umfaßt, das zwischen den Anpassungs- und gegenüberliegenden Stirnflächen verläuft, wobei jedes zusätzliche Loch einen Endabschnitt eines Teils einer optischen Faser (11) hält, wobei deren anderer Endabschnitt von der gegenüberliegenden Stirnfläche hervorsteht und im Vergleich mit den anderen Fasern eine relativ kurze Länge besitzt, wobei die in entsprechenden Positionen in den zwei Steckerkörpern gehaltenen Teile miteinander verbunden sind, wobei die sich ergebende Verbindung angeordnet ist, um die Verbindung zwischen zwei anderen Fasern zu ersetzen, wenn die letztere Verbindung bricht.

2. Optische Stecker umfassend eine erste und zweite Vielzahl von optischen Fasern (1), wobei jede Faser einer Vielzahl einen nichtumhüllten Endabschnitt (2) besitzt, der zu einem nichtumhüllten Endabschnitt (2) einer Faser der anderen Vielzahl koaxial ausgerichtet und damit verbunden ist, wobei die verbunden Endabschnitte in einem Bindungsmittel einer heißen Schmelze, das in einer durch Wärme schrumpfbaren Röhre enthalten ist, eingebettet sind, dadurch gekennzeichnet, daß das Bindungsmittel (7) einer heißen Schmelze auch wenigstens ein Teil einer umhüllten optischen Faser (11) hält, deren deren gegenüberliegende Endabschnitte aus dem Bindungsmittel (7) hervorstehen und im Vergleich mit den Fasern (1) der ersten und zweiten Vielzahl eine relativ kurze Länge besitzen.

3. Stecker nach Anspruch 1, dadurch gekennzeichnet, daß jeder derartige Teil einer optischen Faser (11) einen nichtumhüllten Abschnitt innerhalb des zugeordneten Körpers (3) besitzt.

4. Stecker nach Anspruch 2, gekennzeichnet durch wenigstens zwei deratige Teile von optischen Fasern (11).

5. Stecker nach Anspruch 1 oder 3, dadurch gekennzeichnet, daß jeder Körper wenigstens zwei derartige Teile einer optischen Faser (11) umfaßt.

6. Stecker nach Anspruch 1, 3 oder 5 dadurch gekennzeichnet, daß der Körper ein Bindungsmittel einer heißen Schmelze enthält, in das die Fasern eingebettet sind.

7. Verwendung eines Steckers nach einem der Ansprüche 1 bis 6, um zu ermöglichen, daß ein optischer Weg, der durch eine Faser mit Fehlfunktion innerhalb des Körpers vorgesehen ist, durch einen optischen Weg, der durch die Ersatz-Faser vorgesehen ist, ohne Austausch des gesamten Steckers ersetzt werden kann.

## Revendications

1. Connecteur optique comprenant : deux corps de connecteur (3) reliés ensemble au droit de faces d'adaptation qui se correspondent, chaque corps de connecteur comprenant plusieurs trous s'étendant entre sa face d'adaptation et une face opposée, chaque trou supportant une partie extrémité (2) d'une fibre optique (1), ladite partie extrémité (2) s'étendant et étant dénudée jusqu'au voisinage de la face d'adaptation où elle est connectée à la partie extrémité d'une autre fibre optique supportée dans une position correspondante dans l'autre corps de connecteur, caractérisé en ce que chaque corps de connecteur (3) comprend au moins un trou supplémentaire s'étendant entre lesdites faces d'adaptation et opposées, chaque trou supplémentaire supportant une partie extrémité d'un morceau de fibre optique (11), dont l'autre partie dépasse par rapport à ladite face opposée et est d'une longueur relativement courte par comparaison avec les autres fibres, les morceaux supportés dans des positions correspondantes dans les deux corps de connecteur étant reliés ensemble, la connexion résultante étant prévue pour remplacer la connexion entre deux autres fibres lorsque cette dernière connexion est rompue.

2. Connecteur optique comprenant une première et une seconde pluralité de fibres optiques (1), chaque fibre de l'une des pluralités ayant une partie extrémité dénudée (2) qui est alignée coaxialement avec, et qui est connectée à, une partie extrémité dénudée (2) d'une fibre de l'autre pluralité, les parties extrémités connectées étant noyées dans une colle fusible enfermée dans un tube thermorétractable, caractérisé en ce que ladite colle fusible (7) supporte également au moins un morceau de fibre optique dénudée (11) dont les parties extrémités opposées dépassent de la colle (7) et sont d'une longueur relativement courte par comparaison avec les fibres (1) desdites première et seconde pluralités.

3. Connecteur selon la revendication 1, dans lequel chacun desdits morceaux de fibre optique (11) possède une partie dénudée dans le corps associé (3).

4. Connecteur selon la revendication 2, comprenant au moins deux morceaux de fibres optiques (11).

5. Connecteur selon la revendication 1 ou 3, dans lequel chaque corps comprend au moins deux morceaux de fibres optiques (11).

6. Connecteur selon la revendication 1, 3 ou 5, dans lequel ledit corps contient de la colle fusible dans laquelle lesdites fibres sont noyées.

7. Utilisation d'un connecteur selon l'une quelconque des revendications 1 à 6 pour permettre que le trajet optique réalisé par une fibre défaillante dans ledit corps soit remplacé par un trajet optique réalisé par la fibre de secours sans remplacement de la totalité du connecteur.
